# EUROPÄISCHE PATENTSCHRIFT

(11) **EP 2 361 856 B1**
(45) Veröffentlichungstag und Bekanntmachung des Hinweises auf die Patenterteilung: **22.06.2016**
(21) Anmeldenummer: 11153888.0
(22) Anmeldetag: 09.02.2011
(51) Int. Cl.: B65G 13/10, B65G 39/00

(54) **Förderbahn**
Conveyor
Convoyeur

(30) Priorität: 24.02.2010 DE 102010008970
(43) Veröffentlichungstag der Anmeldung: 31.08.2011
(73) Patentinhaber: KUKA Roboter GmbH, 86165 Augsburg (DE)
(72) Erfinder: Heitzmann, Michael, 76229 Karlsruhe (DE)
(74) Vertreter: Patentanwälte Funk & Böss GbR

(56) Entgegenhaltungen:
- DE-U1-202005 012 682
- GB-A- 2 232 947
- US-A- 4 981 209
- US-A- 5 074 405
- US-B1- 6 360 865

## Beschreibung

Die Erfindung betrifft eine Förderbahn, sowie ein Verfahren zum Betrieben einer solchen Förderbahn.

Konventionelle Förderbahnen sind z.B. Förderbänder oder Rollenbahnen, mittels derer Gegenstände, so genanntes Stückgut entlang einer Förderstrecke bewegt werden.

Die GB 2 232 947 A offenbart eine Förderbahn mit mehreren matrixförmig angeordneten Mecanum-Rädern nach dem Oberbegriff des Anspruchs 1.

Aufgabe der Erfindung ist es, eine flexiblere Förderbahn anzugeben.

Die Aufgabe der Erfindung wird gelöst durch eine Förderbahn zum Fördern eines Stückguts längs einer Förderstrecke gemäß dem Patentanspruch 1.

Die erfindungsgemäße Förderbahn umfasst demnach mehrere matrixförmig angeordnete Mecanum-Räder bzw. omnidirektionales Räder, mittels derer das zu fördernde Stückgut zumindest teilweise entlang der Förderstrecke gefördert werden kann. Sogenannte Mecanum-Räder sind vom Prinzip her dem Fachmann z.B. aus der US 3,876,255 bekannt. Sie umfassen im Allgemeinen die Rollkörper, deren Oberflächen bzw. Mantelflächen bzw. Rollflächen z.B. ballig oder tonnenförmig ausgebildet sind und deren Rollkörperachsen schräg, vorzugsweise im Winkel von 45° zur Drehachse des kompletten Mecanum-Rades, angebracht sind. Erfindungsgemäß bildet diese Oberfläche, die Rollfläche zumindest einen Teil der Förderstrecke, d.h. das Stückgut kann mittels Rollfläche der Rollkörper entlang der Förderstrecke gefördert werden.

Die erfindungsgemäßen Förderbahn weist mehrere Mecanum-Räder auf, wobei die Rollflächen der Rollkörper der Mecanum-Räder zumindest einen Teil der Förderstrecke der Förderbahn bilden. Die einzelnen Mecanum-Räder können z.B. im Raster von ca. 6 cm flächig verbaut sein. Ist die Unterseite des zu fördernden Objektes (Stückgutes) ausreichend plan, um mit allen überdeckten Mecanum-Rädern Kontakt zu halten, dann ist es möglich, das Stückgut lediglich mittels der Mecanum-Räder zu fördern.

Die Mecanum-Räder sind direkt neben einander und direkt hinter einander angeordnet.

Die Mecanum-Räder sind matrixförmig angeordnet. Dadurch kann man auch eine längere oder eine breitere Förderbahn mittels der Mecanum-Räder realisieren.

Die Drehachsen der Rollkörper zweier direkt neben einander angeordneter Mecanum-Räder sind bezüglich der Drehachsen der Mecanum-Räder abwechselnd in verschiedene Richtungen ausgerichtet. Zusätzlich sind die Drehachsen der Rollkörper zweier direkt hinter einander angeordneter Mecanum-Räder bezüglich der Drehachsen der Mecanum-Räder abwechselnd in verschiedene Richtungen ausgerichtet. Dann ist es möglich, wenn die einzelnen Mecanum-Räder oder einzelne Gruppen von Mecanum-Rädern mit unterschiedlichen Geschwindigkeiten bezüglich Betrag und/oder Drehrichtung angetrieben werden, unterschiedliche Förderrichtungen zu realisieren oder gar ein Stückgut zu drehen.

Ein weiterer Aspekt der Erfindung betrifft ein Verfahren zum Betreiben einer Förderbahn, die die matrixförmig angeordneten Mecanum-Räder aufweist, aufweisend Antreiben der Mecanum-Räder, bei denen die Drehachsen der Rollkörper bezüglich der Drehachsen der Mecanum-Räder in einer der Richtungen ausgerichtet sind, mit einer ersten Geschwindigkeit und Antreiben der Mecanum-Räder, bei denen die Drehachsen der Rollkörper bezüglich der Drehachsen der Mecanum-Räder in der anderen Richtung ausgerichtet sind, mit einer von der ersten Geschwindigkeit verschiedenen zweiten Geschwindigkeit. Mittels dieses Verfahrens kann das Stückgut mittels der erfindungsgemäßen Förderbahn in unterschiedliche Förderrichtungen gefördert werden.

Ein weiterer Aspekt der Erfindung betrifft ein Verfahren zum Betreiben einer Förderbahn, die die matrixförmig angeordneten Mecanum-Räder aufweist, aufweisend Antreiben von einem ersten Radpaar bestehend aus zwei neben einander angeordneten Mecanum-Rädern mit einer ersten Geschwindigkeit und Betreiben von einem neben dem ersten Radpaar angeordneten zweiten Radpaar bestehend aus zwei weiteren neben einander angeordneten Mecanum-Räder mit einer von der ersten Geschwindigkeit verschiedenen zweiten Geschwindigkeit.

Es ist insbesondere möglich, mehrere hintereinander angeordnete erste Radpaare mit der ersten Geschwindigkeit und mehrere hintereinander angeordnete zweite Radpaaren mit der zweiten Geschwindigkeit anzutreiben.

Unterscheiden sich z.B. die Richtungen der beiden Geschwindigkeiten, dann kann das zu fördernde Stückgut im Wesentlichen auf der Stelle gedreht werden. sind die Beträge der beiden Geschwindigkeiten unterschiedlich, dann kann das Stückgut während des Förderns entlang der Förderstrecke gedreht werden.

Je nach Ausführungsform der erfindungsgemäßen Förderbahn können einzelne Objekte (Stückgüter), die beispielsweise gemeinsam auf der Förderbahn bewegt werden, individuell verschoben und/oder gedreht werden. Hierdurch kann z.B. eine Lage von Artikeln vereinzelt oder gemischt werden.

Ein Ausführungsbeispiel der Erfindung ist exemplarisch in den beigefügten schematischen Zeichnungen dargestellt. Es zeigen:
- Fig. 1: ein Mecanum-Rad,
- Fig. 2: eine Draufsicht eines Teils einer Förderbahn, die mehrere Mecanum-Räder aufweist,
- Fig. 3: Bewegungsrichtungen eines mittels der Förderbahn geförderten Stückgutes und
- Figs. 4a und 4b: eine Draufsicht der Förderbahn mit einem geförderten Stückgut in einer schematischen Darstellung.

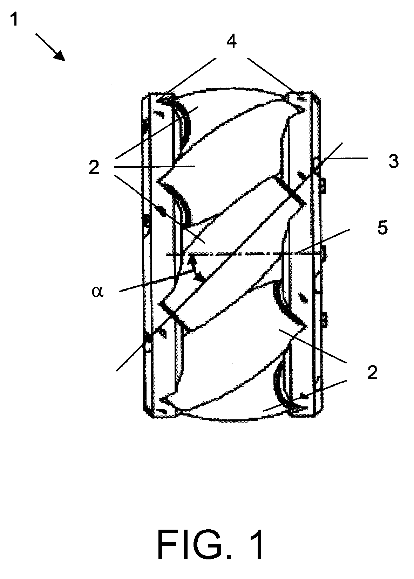

Die Fig. 1 zeigt eine Frontansicht eines dem Fachmann im Wesentlichen bekannten Mecanum-Rades 1. Das Mecanum-Rad 1 weist zwei starr miteinander verbundene Radscheiben 4 auf, zwischen denen mehrere Rollkörper 2 bezüglich ihrer Längsachsen 3 drehbar gelagert sind. Die beiden Radscheiben 4 sind bezüglich einer Drehachse 5 drehbar gelagert und können mittels eines in der Figur 1 nicht näher dargestellten Antriebs derart angetrieben werden, dass sich die beiden Radscheiben 4 bezüglich der Drehachse 5 drehen.

Im Falle des vorliegenden Ausführungsbeispiels sind die Rollkörper 2 gleichmäßig zueinander beabstandet und derart an den Radscheiben 4 gelagert, dass ihre Rollflächen über den Umfang der Radscheiben 4 herausragen. Außerdem sind die Rollkörper 2 derart an den Radscheiben 4 gelagert, dass ihre Längsachsen 3 mit der Drehachse 5 einen spitzen Winkel α von vorzugsweise 45° aufweisen.

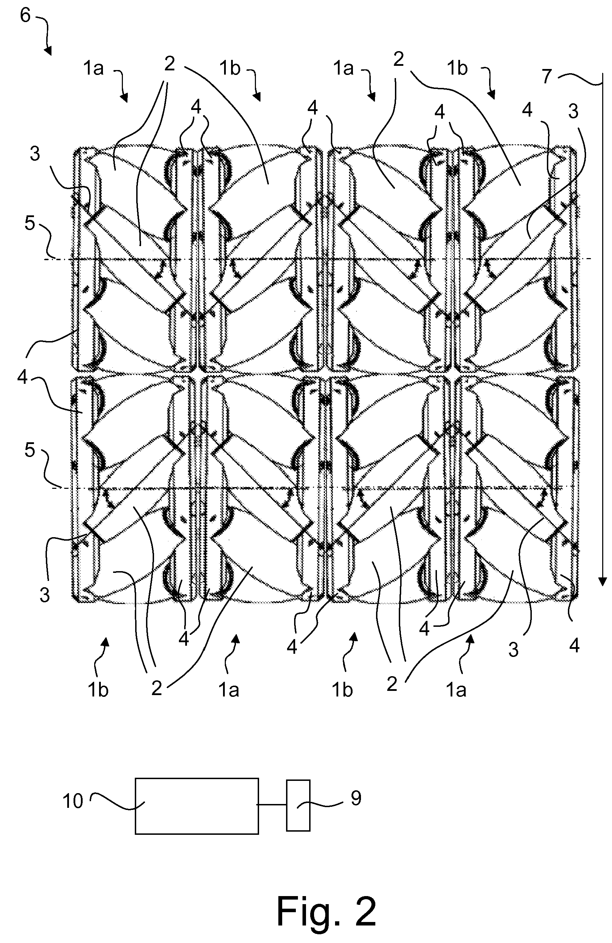

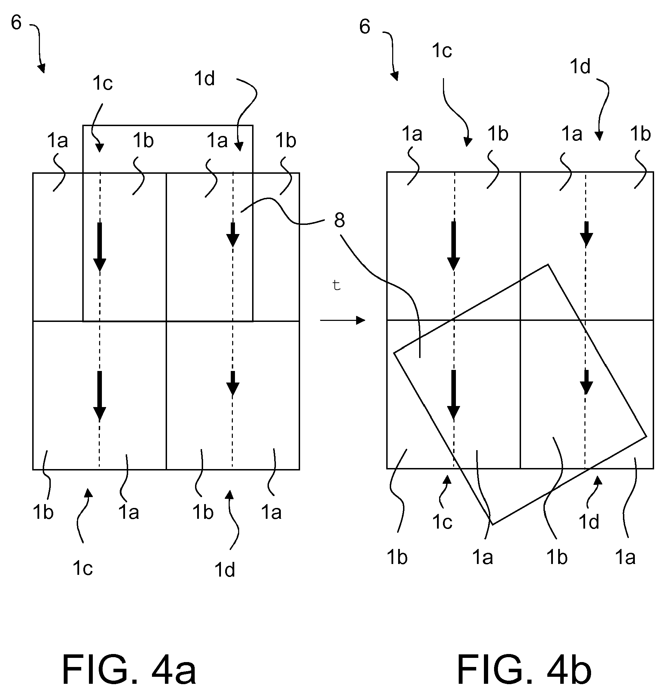

Die Fig. 2 zeigt einen Ausschnitt einer Förderbahn 6 in einer Draufsicht. Die Förderbahn 6 weist im Falle des vorliegenden Ausführungsbeispiels mehrere matrixförmig nebeneinander und hinter einander angeordnete Mecanum-Räder 1a, 1b auf. Die einzelnen Mecanum-Räder 1a, 1b sind entsprechend dem in der Fig. 1 gezeigten Mecanum-Rad 1 ausgeführt und die Rollflächen der Rollkörper 2 bilden eine Förderstrecke für mittels der Förderbahn 6 zu befördernde und in den Figuren 4a und 4b gezeigte Stückgüter 8 z.B. in Richtung eines Pfeils 7.

Die Radscheiben 4 werden im Falle des vorliegenden Ausführungsbeispiels jeweils von Antrieben 9, insbesondere von elektrischen Antrieben vorzugsweise individuell angetrieben. Die Antriebe 9 sind mit einer Steuervorrichtung 10 verbunden. Somit ist es möglich, gesteuert durch die Steuervorrichtung 10 die einzelnen Räder 1a, 1b mit individuellen Geschwindigkeiten und/oder Drehrichtungen zu betreiben.

Im Falle des vorliegenden Ausführungsbeispiels sind die Mecanum-Räder 1a, 1b derart neben einander und hinter einander angeordnet, sodass die Längsachsen 3 ihrer Rollkörper 2 mit den Drehachsen 5 ihrer Radscheiben 4 den Winkel α abwechselnd im Uhrzeigersinn und abwechselnd gegen den Uhrzeigersinn einschließen; d.h. die Rollkörper 2 von hinter einander und neben einander angeordneten Mecanum-Rädern 1a, 1b sind abwechselnd bezüglich des Pfeils 7, also entlang der Förderstrecke nach links oder nach recht geneigt. Im Falle des vorliegenden Ausführungsbeispiels sind die Rollkörper 2 der Mecanum-Räder 1a bezüglich der Richtung der Förderstrecke (Richtung des Pfeils 7) nach rechts und die Rollkörper 2 der Räder 1b bezüglich der Richtung der Förderstrecke (Richtung des Pfeils 7) nach links ausgerichtet.

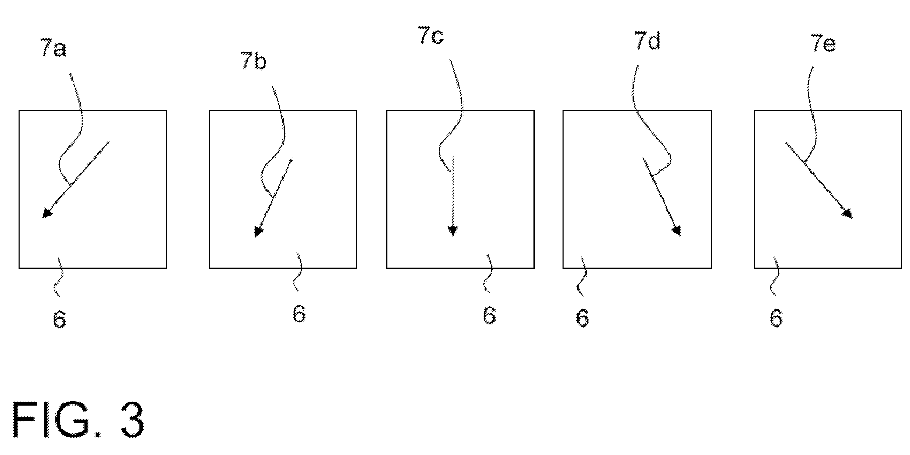

Je nachdem, mit welchen Geschwindigkeiten die Radscheiben 4 der Mecanum-Räder 1a, 1b mittels ihrer Antriebe gedreht werden, ergeben sich aufgrund der Anordnung bzw. der Ausrichtung der Rollkörper 2 relativ zur Förderstrecke unterschiedliche Bewegungsrichtungen von mittels der Förderbahn 6 geförderter Stückgüter 8. Verschiedene Förderrichtungen 7a bis 7e der Förderbahn 6 aufgrund verschieden schnell angetriebener Mecanum-Räder 1a, 1b sind in der Fig. 3 veranschaulicht.

Im Falle der in der Fig. 3 gezeigten Förderrichtungen 7a bis 7e drehen alle Mecanum-Räder 1a mit derselben Geschwindigkeit A und alle Mecanum-Räder 1b mit derselben Geschwindigkeit B.

Drehen die Mecanum-Räder 1b doppelt so schnell wie die Mecanum-Räder 1a, d.h. ist A=1 und B=2, so stellt sich z.B. die Förderrichtung 7a ein, gemäß derer die Stückgüter 8 von rechts oben nach links unten bezüglich der Zeichenebene gefördert werden.

Drehen die Mecanum-Räder 1b mit einer Geschwindigkeit B von 1,5 mal der Geschwindigkeit A der Mecanum-Räder 1a, d.h. ist A=1 und B=1,5, so stellt sich z.B. die Förderrichtung 7b ein, gemäß derer die Stückgüter 8 ebenfalls von rechts oben nach links unten bezüglich der Zeichenebene gefördert werden, jedoch mit einer Geschwindigkeitskomponente nach unten bezüglich der Zeichenebene, die größer ist als im Falle der Förderrichtung 7a.

Drehen die Mecanum-Räder 1a und 1b mit derselben Geschwindigkeit, d.h. ist A=1 und B=1, so stellt sich z.B. die Förderrichtung 7c ein, gemäß derer die Stückgüter 8 von oben nach unten bezüglich der Zeichenebene gefördert werden.

Drehen die Mecanum-Räder 1a mit einer Geschwindigkeit A von 1,5 mal der Geschwindigkeit B der Mecanum-Räder 1b, d.h. ist A=1,5 und B=1, so stellt sich z.B. die Förderrichtung 7d ein, gemäß derer die Stückgüter 8 von links oben nach rechts unten bezüglich der Zeichenebene gefördert werden.

Drehen die Mecanum-Räder 1a doppelt so schnell wie die Mecanum-Räder 1b, d.h. ist A=2 und B=1, so stellt sich z.B. die Förderrichtung 7e ein, gemäß derer die Stückgüter 8 ebenfalls von links oben nach rechts unten bezüglich der Zeichenebene gefördert werden, jedoch mit einer Geschwindigkeitskomponente nach unten bezüglich der Zeichenebene, die kleiner ist als im Falle der Förderrichtung 7d.

Bei geeignet gewählten Geschwindigkeiten der Mecanum-Räder 1a, 1b ist es auch möglich, mittels der Förderbahn 6 Stückgüter 8 zu drehen. Dies ist in den Figuren 4a und 4b beispielhaft gezeigt.

Die Figuren 4a und 4b zeigen jeweils eine Draufsicht der Förderbahn 6 bzw. eines Teils der Förderbahn 6 in einer schematischen Darstellung. In den Figuren 4a, 4b sind jeweils ein Mecanum-Rad 1a und ein daneben angeordnetes Mecanum-Rad 1b zu einem Radpaar zusammengefasst. Insbesondere sind die bezüglich der Zeichenebene links angeordneten Radpaare mit dem Bezugszeichen 1c und die rechts neben den Radpaaren 1c angeordneten Radpaare mit dem Bezugzeichen 1 d versehen.

Im Falle des vorliegenden Ausführungsbeispiels drehen die Mecanum-Räder 1a, 1b der links angeordneten Radpaare 1c mit derselben Geschwindigkeit, d.h. die Geschwindigkeiten A, B der Mecanum-Räder 1a, 1b der Radpaare 1c sind jeweils beispielsweise 1. Die Mecanum-Räder 1a, 1b der rechts angeordneten Radpaare 1d drehen ebenfalls jeweils mit denselben Geschwindigkeiten, jedoch im Vergleich zu den Mecanum-Rädern 1a, 1b der links angeordneten Radpaaren 1c nur mit der halben Geschwindigkeit, d.h. die Geschwindigkeiten A, B der Mecanum-Räder 1a, 1b der Radpaare 1d sind im vorliegenden Fall jeweils 0,5.

Drehen die Mecanum-Räder 1a, 1b des Förderbandes 6 derart, dass eine Förderrichtung von oben nach unten bezüglich der Zeichenebene entsteht, Dann dreht das Förderband 6 das Stückgut 8 gegen den Uhrzeigersinn, wie dies in den Figuren 4a und 4b gezeigt ist. Die Figur 4b zeigt hierbei das Stückgut 8 im Vergleich zur Figur 4a nach einer Zeitdauer t.

Es ist auch möglich, mehrere dieser Bewegungen gleichzeitig auf das Stückgut 8 anzuwenden. Weist das Förderband 6 noch weitere Mecanum-Räder 1a, 1b auf, dann ist es auch möglich, mehrere Stückgüter 8 unabhängig voneinander auf der Stelle zu drehen, falls z.B. genügend Platz vorhanden ist.

Es ist auch möglich, mit einer entsprechenden Planung der Bewegung der Stückgüter 8 erst die umliegenden Stückgüter 8 weg zu bewegen und dann die gewünschte Operation auszuführen und danach die Stückgüter 8 wieder zusammenzufördern.

Das Ganze kann auch beim Transport von einem Ort zum anderen erfolgen.

## Patentansprüche

1. Förderbahn zum Fördern eines Stückguts (8) längs einer Förderstrecke, aufweisend mehrere matrixförmig, direkt neben einander und direkt hinter einander angeordnete Mecanum-Räder (1a, 1b), die jeweils mehrere Rollkörper (2) umfassen, deren Drehachsen (3) in einem spitzen Winkel (α) zur Drehachse (5) des Mecanum-Rades (1a, 1b) ausgerichtet sind und deren Rollflächen zumindest einen Teil der Förderstrecke der Förderbahn (6) bilden, wobei die Drehachsen (3) der Rollkörper (2) zweier direkt neben einander angeordneter Mecanum-Räder (1a, 1b) bezüglich der Drehachsen (5) der Mecanum-Räder (1a, 1b) abwechselnd in verschiedene Richtungen ausgerichtet sind, **dadurch gekennzeichnet, dass** die Drehachsen (3) der Rollkörper (2) zweier direkt hinter einander angeordneter Mecanum-Räder (1a, 1b) bezüglich der Drehachsen (5) der Mecanum-Räder (1a, 1b) abwechselnd in verschiedene Richtungen ausgerichtet sind.

2. Verfahren zum Betreiben einer Förderbahn (6) nach Anspruch 1, aufweisend Antreiben der Mecanum-Räder (1a), bei denen die Drehachsen (3) der Rollkörper (2) bezüglich der Drehachsen (5) der Mecanum-Räder (1a, 1b) in einer der Richtungen ausgerichtet sind, mit einer ersten Geschwindigkeit und Antreiben der Mecanum-Räder (1b), bei denen die Drehachsen (3) der Rollkörper (2) bezüglich der Drehachsen (5) der Mecanum-Räder (1a, 1b) in der anderen Richtungen ausgerichtet sind, mit einer von der ersten Geschwindigkeit verschiedenen zweiten Geschwindigkeit.

3. Verfahren zum Betreiben einer Förderbahn (6) nach Anspruch 1, aufweisend Antreiben von einem ersten Radpaar (1c) bestehend aus zwei neben einander angeordneten Mecanum-Rädern (1a, 1b) mit einer ersten Geschwindigkeit und Betreiben von einem neben dem ersten Radpaar (1c) angeordneten zweiten Radpaar (1d) bestehend aus zwei weiteren neben einander angeordneter Mecanum-Räder (1a, 1b) mit einer von der ersten Geschwindigkeit verschiedenen zweiten Geschwindigkeit.

4. Verfahren nach Anspruch 3, aufweisend Antreiben von mehren hintereinander angeordneten ersten Radpaare (1c) mit der ersten Geschwindigkeit und Antreiben von mehreren hintereinander angeordneten zweiten Radpaaren (1d) mit der zweiten Geschwindigkeit.

5. Verfahren nach Anspruch 3 oder 4, bei dem die Richtungen der beiden Geschwindigkeiten unterschiedlich sind.

6. Verfahren nach einem der Ansprüche 3 bis 5, bei dem die Beträge der beiden Geschwindigkeiten unterschiedlich sind.

## Claims

1. Conveyor track for conveying a load unit (8) along a conveyor line, comprising a plurality of mecanum wheels (1a, 1b) arranged matrix-like directly next to one another and directly behind one another, which mecanum wheels each comprise a plurality of roller bodies (2), the rotary axes (3) of which are aligned at an acute angle (α) to the axis of rotation (5) of the mecanum wheel (1a, 1b) and the roller surfaces of which form at least a portion of the conveyor line of the conveyor track (6), wherein the rotary axes (3) of the roller bodies (2) of two mecanum wheels (1a, 1b) arranged directly next to one another are aligned alternately in different directions relative to the rotary axes (5) of the mecanum wheels (1a, 1b),
**characterised in that** the rotary axes (3) of the roller bodies (2) of two mecanum wheels (1a, 1b) arranged directly behind one another are aligned alternately in different directions relative to the rotary axes (5) of the mecanum wheels (1a, 1b).

2. Method for operating a conveyor track (6) according to claim 1, comprising driving the mecanum wheels (1a), in which the rotary axes (3) of the roller bodies (2) are aligned relative to the rotary axes (5) of the mecanum wheels (1a, 1b) in one of the directions, at a first speed and driving the mecanum wheels (1b), in which the rotary axes (3) of the roller bodies (2) are aligned relative to the rotary axes (5) of the mecanum wheels (1a, 1b) in the other directions, at a second speed different from the first speed.

3. Method for operating a conveyor track (6) according to claim 1, comprising driving a first wheel pair (1c) consisting of two mecanum wheels (1a, 1b) arranged next to one another at a first speed und operating a second wheel pair (1d) arranged next to the first wheel pair (1c) consisting of two additional mecanum wheels (1a, 1b) arranged next to one another at a second speed different from the first speed.

4. Method according to claim 3, comprising driving a plurality of first wheel pairs (1c) arranged behind one another at the first speed and driving a plurality of second wheel pairs (1d) arranged behind one another at the second speed.

5. Method according to claim 3 or 4, in which the directions of the two speeds are different.

6. Method according to any one of claims 3 to 5, in which the inputs of the two speeds are different.

## Revendications

1. Convoyeur pour convoyer un article (8) le long d'une voie de convoyage, présentant plusieurs roues mecanum (1a, 1b) agencées en forme de matrice, directement les unes à côté des autres et directement les unes derrière les autres, qui comprennent chacune plusieurs corps de roulement (2) dont les axes de rotation (3) sont orientés en formant un angle aigu (α) par rapport à l'axe de rotation (5) de la roue mecanum (1a, 1b) et dont les surfaces de roulement forment au moins une partie de la voie de convoyage du convoyeur (6), les axes de rotation (3) des corps de roulement (2) de deux roues mecanum (1a, 1b) agencées directement l'une à côté de l'autre, par rapport aux axes de rotation (5) des roues mecanum (1a, 1 b), étant orientées en alternance dans différentes directions, **caractérisé en ce que** les axes de rotation (3) des corps de roulement (2) de deux roues mecanum (1a, 1b) agencées directement l'une derrière l'autre, par rapport aux axes de rotation (5) des roues mecanum (1a, 1b), sont orientées en alternance dans différentes directions.

2. Procédé pour faire fonctionner un convoyeur (6) selon la revendication 1, présentant l'entraînement des roues mecanum (1a), dans lesquelles les axes de rotation (3) des corps de roulement (2), par rapport aux axes de rotation (5) des roues mecanum (1a, 1 b) sont orientés dans une des direction, avec une première vitesse, et l'entraînement des roues mecanum (1 b) dans lesquelles les axes de rotation (3) des corps de roulement (2), par rapport aux axes de rotation (5) des roues mecanum (1a, 1b), sont orientés dans l'autre direction, avec une deuxième vitesse différente de la première vitesse.

3. Procédé pour faire fonctionner un convoyeur (6) selon la revendication 1, présentant l'entraînement d'une première paire de roues (1c) constituée par deux roues mecanum (1a, 1b) agencées l'une à côté de l'autre avec une première vitesse, et l'entraînement d'une deuxième paire de roues (1d) agencée à côté de la première paire de roues (1), constituée par deux autres roues mecanum (1a, 1b) agencées l'une à côté de l'autre) avec une deuxième vitesse différente de la première vitesse.

4. Procédé selon la revendication 3, présentant l'entraînement de plusieurs premières paires de roues (1c) agencées les unes derrière les autres avec une première vitesse, et l'entraînement de plusieurs deuxième paires de roues (1d) agencées les unes derrière les autres avec une deuxième vitesse.

5. Procédé selon la revendication 3 ou 4, dans lequel les directions des deux vitesses sont différentes.

6. Procédé selon l'une des revendications 3 à 5, dans lequel les valeurs des deux vitesses sont différentes.
